# EUROPEAN PATENT APPLICATION

(11) **EP 1 026 892 A1**
(43) Date of publication of application: **09.08.2000**
(21) Application number: 00100884.6
(22) Date of filing: 18.01.2000
(51) Int. Cl.: H04N 5/775, H04N 5/40

(54) **Vacant broadcast channel searching system**

(30) Priority: 03.02.1999 GB 9902287
(71) Applicant: Pace Micro Technology PLC, Saltaire, Shipley, BD14 3LF (GB)
(72) Inventor: Coe, Peter, Skipton, North Yorkshire, BD23 2TE (GB)
(74) Representative: Wood, Graham

(57) **Abstract**

The invention relates to the installation of electrical apparatus for receiving broadcast data, referred to as a receiver, which receives data and generates video/audio displays through a television set to which it is connected. When installing, the receiver can use the RF modulator signal from the television as reference but this can be interfered if the channel used to carry the signal is already used to receive a signal from an aerial input. The current invention prevents interference by first scanning the aerial input to identify the signals received and the location of the same which then allows free locations or channels to be identified and used for the RF modulator signal.

## Description

The invention to which this application relates is an improvement in the selection of a convenient TV modulator channel upon installation of a receiver for broadcast digital data, referred to as a receiver, which is used for receiving broadcast digital data signals in conjunction with a display means such as that of a television set and particularly when there is a need to access and read the control menu for the receiver which is achieved by using the RF modulator output, at the time of installation of the receiver.

At the present time, the use of RF modulator output to read the control menu of the receiver requires the person who is installing the receiver to first tune the display means, hereinafter referred to as a television set, connected to the receiver into the RF modulator output of the receiver, using the channel for the output, typically the default channel setting. If a customer has connected the aerial lead to the television set at this time then there may potentially be interference between the default channel and the signal entering via the aerial lead as all signals present at the aerial lead are fed through to and added with the TV modulator output. At the present time, the solution is to use a channel not present at the aerial input so as to avoid the occurrence of interference but there is currently no means by which to identify the signals which are present at the aerial input so that it is not then possible to know which channel to select. It is also possible that more than one channel will be needed, as TV signals generated by other TV appliances, such as Video Cassette recorders, other receivers, games machines and the like, may be placed after the TV modulator output and before the TV, these other TV appliances therefore perhaps using or needing a free channel also.

The aim of the present invention is to allow a means whereby the installer of a receiver which uses the RF modulator can identify a default channel or channels which can be selected and to allow the installer to be sure that no interference will occur.

In a first aspect of the invention there is provided apparatus comprising a receiver for receiving broadcast data signals in conjunction with a television set and installation means, said apparatus utilising an RF modulator and in installing the apparatus the installer tunes the television set into the RF modulator output and characterised in that the installing means frequency scans the entire aerial input to the apparatus to identify the frequency locations of all of the station signals and/or other types of signals which are received by the receiver and allocated digital and analogue channels, and available or free frequency locations are then identified for the selection of the location of the said modulation output from the television set on one of said available frequency locations for the subsequent installation procedure to then be followed.

In one embodiment the other types of signals received can be any or any combination of Taxi radio signals, radar and other signals external to the television but which may be received and the location of which can usefully be identified.

Typically the frequency location of these signals at the aerial input are identified and stored in a memory in the receiver, such as non-volatile memory, so that the receiver control system can then indicate the preferred default channel frequency for use of the RF modulator. Thus, for example, if one of the possible channels for the use of the RF modulator in the installation is channel 37, then this would be identified by the receiver as not being a preferred option due to the existence of a TV Station on the same channel 37 which would mean that there is a significant risk of interference if that channel was selected for the installation procedure. The receiver can instead identify that another channel, say channel 50 in the UK, for example, is free and sufficiently clear from any analogue channels or other signals so as to minimise the risk of interference to the RF modulator output signal.

This process requires the installer to retune the television set after the installation but this can be common practise during receiver installations in any case. The advantage to the installer is that they can be sure that the default channel which is chosen will be free of interference, during the installation procedure.

In a further aspect of the invention there is provided a method for installing a receiver of digital data with a television set utilising an RF modulator signal, said method comprising the steps of frequency scanning the input from an aerial for receiving the data, identifying and locating all of the signals received, storing said information in a memory, when the scanning is complete identifying those frequency and channel locations which are available and free, selecting one of said channels for the reception of the RF modulator signal to use in the installation of the apparatus.

A specific embodiment of the invention is now described wherein at the instant of switching on a television set with a broadcast data signal receiver to be installed, in accordance with the invention, the apparatus scans the broadcast data received at the aerial to identify all the channels, both digital and analogue and other types of signals, which can be received. The user can select the channels to be received for viewing, but in addition, details of all of the signals received are stored in a non-volatile memory in the receiver so that the position of the same is known.

With this information known, an RF modulator channel is generated which, for installation purposes, needs to be positioned at a free channel and preferably with a free channel adjacent thereto. The location of the free channels can be identified from the stored information on the known "used" channel locations. The RF modulator signal can then be positioned on an appropriate free channel by the installer or automatically by the receiver control system, which was not previously possible.

In order to be able to identify the position of the modulator channel it is envisaged that a screen message is generated so that the position can be identified by scanning through the channels on the television to reach the message which indicates the position.

Thus, in one example, a sequence of actions in the following procedure can be followed in accordance with the invention.
1. The receiver is connected to a mains supply and the TV aerial lead is connected in the conventional manner
2. The receiver is powered on. The receiver identifies that it is at a new installation, having never before carried out a frequency scan or by checking for one or more known channels at the aerial input. Alternatively, the user (installer, customer or the like) may select a "new install" status using either the remote control hand set or front panel buttons, perhaps in conjunction with the receiver menu displayed on the television screen.
3. The receiver perhaps, but not necessarily, with the TV modulator turned off, scans the aerial input recording the frequency location and amplitude level if appropriate of all signals present at that input, and records the location of the signals.
4. The receiver then determines by software or the like the free or available frequency locations which are acceptably free of signals or having signals with amplitude levels which are determined as causing levels of interference which are acceptable and can be tolerated.
5. The TV modulator is then switched on and set to one of the free frequency locations. This location is also stored in memory.
6. The installer, customer or the like then tunes his TV set to the location of the TV modulator output in the usual way.
7. If in the event the frequency channel location channel chosen by the receiver for the TV modulator output is used by another TV appliance after the receiver then by means of the remote control handset or front panel and perhaps in conjunction with the menu, another frequency location, typically the next recorded location which is acceptably free of interference, can be selected, and the TV is again tuned to the TV modulator output signal in the normal way.

It will therefore be appreciated that the ability to select a free location for use of the RF modulator during the installation procedure by first identifying those locations which are already used, improves the efficiency of the installation procedure and the speed of same.

## Claims

1. Apparatus comprising a receiver for receiving broadcast data signals in conjunction with a television set and installation means, said apparatus utilising an RF modulator and in installing the apparatus the installer tunes the television set into the RF modulator output and characterised in that the installing means frequency scans the entire aerial input to the apparatus to identify the frequency locations of all of the station signals and/or other types of signals which are received by the receiver and allocated digital and analogue channels, and available or free frequency locations are then identified for the selection of the location of the said modulation output from the television set on one of said available frequency locations for the subsequent installation procedure to then be followed.

2. A means according to claim 1 wherein all signals detected which are above a preset amplitude are detected and their position located by the installing means during the frequency scan procedure.

3. A means according to claim 1 wherein the frequency location of the signals which are detected at the aerial input are identified and stored in a memory in the receiver.

4. A means according to claim 3 wherein the memory used is a non-volatile memory and the receiver control system recommends a preferred channel frequency for the use of the RF modulator, based on the data held in the memory.

5. A means according to claim 1 wherein when the channel locations are detected and stored, an analysis of the same is undertaken to identify available channels and one of said channels selected as the location of a default channel for the RF modulator output signal.

6. A method for installing a receiver of digital data with a television set utilising an RF modulator signal, said method comprising the steps of frequency scanning the input from an aerial for receiving the data, identifying and locating all of the signals received, storing said information in a memory, when the scanning is complete identifying those frequency and channel locations which are available and free, selecting one of said channels for the reception of the RF modulator signal to use in the installation of the apparatus.
